# FASCICULE DE BREVET EUROPEEN

(11) **EP 4 009 180 B1**
(45) Date de publication et mention de la délivrance du brevet: **19.02.2025**
(21) Numéro de dépôt: 21209184.7
(22) Date de dépôt: 19.11.2021
(51) Int. Cl.: G06F 13/20, G06F 1/24

(54) **PROCÉDÉ DE RÉINITIALISATION D'UN DISPOSITIF MAÎTRE D'UN SYSTÈME SUR PUCE ET SYSTÈME SUR PUCE CORRESPONDANT**
VERFAHREN ZUM ZURÜCKSETZEN EINES MASTER-GERÄTS EINES SYSTEM-ON-CHIP UND ENTSPRECHENDES SYSTEM-ON-CHIP
METHOD FOR RESTARTING A MASTER DEVICE OF A CHIP-BASED SYSTEM AND CORRESPONDING CHIP-BASED SYSTEM

(30) Priorité: 04.12.2020 FR 2012718
(43) Date de publication de la demande: 08.06.2022
(73) Titulaire: STMicroelectronics (Grand Ouest) SAS, 72100 Le Mans (FR); STMICROELECTRONICS (GRENOBLE 2) SAS, 38000 Grenoble (FR)
(72) Inventeur: PALLARDY, Loic, 72700 ROUILLON (FR); SOULIE, Michael, 38850 CHIRENS (FR)
(74) Mandataire: Casalonga

(56) Documents cités:
- US-A1- 2019 212 794
- US-B2- 10 318 466

## Description

Des modes de mise en oeuvre et de réalisation concernent les systèmes sur puce, et en particulier la réinitialisation de dispositifs maîtres capables d'initier des transactions sur un bus de système sur puce.

Les systèmes sur puce comprennent typiquement un ou plusieurs dispositif(s) maître(s) capable(s) d'initier des transactions sur un ou plusieurs bus. Une transaction est typiquement initiée par l'émission d'une requête par un maître, et s'achève par la réception d'une réponse émise par un dispositif esclave ou par un autre dispositif maître qui possède une interface de control fonctionnant en mode esclave. Les transactions « non-résolues » (usuellement « outstanding » en anglais) peuvent être initiées consécutivement, c'est-à-dire que de nouvelles requêtes peuvent être émises par le maître avant réception des réponses aux requêtes précédentes.

Lors de la réinitialisation d'un dispositif maître, le système doit tenir compte des transactions en cours sur le bus.

En effet, si une réinitialisation d'un maître se produit alors que le maître émet une transaction sur le bus, la transaction peut être incomplète et le bus peut se bloquer, au point de nécessiter une réinitialisation du système complet.

Et, si une réinitialisation d'un maître se produit alors que le maître attend la réponse d'une transaction sur le bus, des réponses orphelines seront présentes sur le bus et ne seront pas comprises par le maître après réinitialisation, au risque de produire un dysfonctionnement du dispositif maître.

Pour tenir compte de ces contraintes, une solution classique est de réinitialiser le système complet, ou une partie cohérente du système, pour retrouver après redémarrage un état vierge, connu, maitrisé du système ou de la partie du système.

Cette solution n'est pas applicable aux systèmes sur puce comprenant plusieurs dispositifs maîtres, dans lesquels l'un des maîtres exécute une fonction critique, tel que le contrôle d'un moteur.

Une autre solution classique est d'attendre que le dispositif maître entre dans un état d'attente d'interruption (« Wait For Interrupt » en anglais) pour garantir qu'aucune transaction n'est en cours lors de la réinitialisation.

Cette solution ne fonctionne pas lorsque le processeur est bloqué de façon logicielle, par exemple dans une boucle infinie, et n'entre pas dans l'état d'attente d'interruption. Dans ce cas, la réinitialisation ne se produit jamais et une réinitialisation du système complet doit être appliquée.

Une autre solution classique est de réinitialiser le bus affecté par la transaction en même temps que le maître. Cela requiert une architecture de bus spécifique et une corrélation profonde entre l'infrastructure de bus et le dispositif maître, qui peut limiter le choix des dispositifs maîtres dans le système et/ou contraindre l'architecture du système d'interconnexion.

Il existe donc un besoin de sécuriser les réinitialisations des dispositifs maîtres des systèmes sur puce, sans subir les contraintes susmentionnées, c'est-à-dire notamment sans réinitialiser tous les dispositifs connectés sur le bus, d'être compatible avec les blocages logiciels, et sans imposer l'infrastructure des bus et des dispositifs maîtres qui y sont connectés.

Le document US2019212794 décrit un îlot de sécurité, intégré dans un système sur puce (SoC) qui contient un processeur de sécurité et des périphériques liés à la sécurité. En cours d'exécution, la partie du système sur puce qui n'est pas liée à la sécurité peut être réinitialisée, tandis que l'îlot de sécurité doit continuer à exécuter les fonctions de sécurité. Si l'îlot de sécurité a des demandes en attente auprès du reste du SoC au moment de la réinitialisation, ces transactions en attente peuvent être perdues, ce qui entraîne un blocage de l'îlot de sécurité. La présente invention propose un mécanisme matériel permettant d'empêcher l'îlot de sécurité de se bloquer dans le scénario ci-dessus.

Il est proposé à cet égard un procédé de réinitialisation d'un dispositif maître configuré pour initier des transactions sur un bus d'un système sur puce, comprenant une surveillance d'un état terminé ou non des transactions initiées par le dispositif maître, et, en cas de réception d'une commande de réinitialisation du dispositif maître, une réinitialisation effective du dispositif maître lorsque les transactions initiées par le dispositif maître sont à l'état terminé.

En d'autres termes, il est proposé d'intercepter une commande de réinitialisation et de ne la retransmettre au dispositif maître seulement lorsque toutes les transactions précédentes sur le bus sont terminées. Cela permet de garantir un état compatible des transactions sur le bus avec la réinitialisation du dispositif maître, et d'éviter notamment la présence d'une transaction incomplète sur le bus et une réception d'une réponse orpheline par le dispositif maître. Le procédé selon cet aspect est en outre compatible avec tout type de bus de protocole de communication associé.

Selon un mode de mise en oeuvre, la surveillance comprend une détection de signaux transitant sur des ports d'entrée et de sortie d'une interface entre le dispositif maître et le bus.

Une détection de la présence de signaux sur l'entrée et la sortie de l'interface peut en effet permettre de surveiller si les transactions initiées par le dispositif maître sont terminées ou non, de façon avantageusement simple et compatible avec tout type de protocole de communication.

Selon un mode de mise en oeuvre, une transaction comprend une émission d'une requête sur le port de sortie de l'interface et une réception d'une réponse sur le port d'entrée de l'interface, et ladite surveillance comprend un comptage du nombre de requêtes émises sur le port de sortie et un comptage du nombre de réponses reçues sur le port d'entrée, un nombre de réponses reçues égal au nombre de requêtes émises étant représentatif de l'état terminé des transactions initiées par le dispositif maître.

Ainsi, tant que la différence entre le nombre compté de requêtes émises et le nombre compté de réponses reçues n'est pas nulle, les transactions initiées par le dispositif maître sur les bus sont à l'état non-terminé.

Un signal de blocage est généré au moment de la réception de la commande de réinitialisation du dispositif maître, de façon à bloquer l'initiation d'une nouvelle transaction par le dispositif maître.

En cas de réception de la commande de réinitialisation du dispositif maître pendant la transmission d'une requête, le signal de blocage est avantageusement généré après la fin de la transmission de cette requête.

Le signal de blocage peut être généré à cet égard immédiatement après la fin de l'émission d'une requête par le dispositif maître, si la commande de réinitialisation est reçue pendant cette émission, afin de bloquer l'initiation d'une prochaine (nouvelle) transaction.

Selon un mode de mise en oeuvre, la génération du signal de blocage comprend une activation d'un signal de réinitialisation effective, et la réinitialisation effective du dispositif maître comprend une désactivation du signal de réinitialisation effective, lorsque les transactions initiées par le dispositif maître sont à l'état terminé et lorsque la commande de réinitialisation reçue a pris fin.

Par « activation d'un signal », on entend « placement du signal à un premier niveau logique », par exemple le niveau haut pour un « 1 » logique, et par « désactivation », on entend « placement du signal à un deuxième niveau logique », par exemple le niveau bas pour un « 0 » logique.

La commande de réinitialisation, vue par le dispositif maître, est en effet typiquement communiquée par une activation d'un signal, ici appelé signal de réinitialisation effective, qui impose un arrêt de l'activité et une remise à zéro du dispositif maître, suivi d'une désactivation du signal de réinitialisation effective qui autorise un redémarrage de l'activité remise à zéro.

Une transaction comprend typiquement une réponse transmise sur le bus, et, avantageusement, les réponses transmises sur le bus lorsque le signal de réinitialisation effective est activé ne sont pas communiquées au dispositif maître et sont effacées du bus.

Par « effacées du bus », on entend que les réponses sont reçues, et éventuellement confirmées, de manière à clore la transaction du point de vue du dispositif émetteur de la réponse.

Selon un autre mode de mise en oeuvre, la génération du signal de blocage comprend une transmission au dispositif maître d'un signal d'état du bus forcé à l'état occupé, la réinitialisation effective du dispositif maître comprenant une activation impulsionnelle d'un signal de réinitialisation effective.

En effet, un signal d'état du bus peut classiquement être prévu, par exemple pour communiquer un état prêt (« ready » en anglais) ou un état occupé (« busy » en anglais) afin de réaliser une procédure d'établissement de liaison (« handshake » selon le terme anglais usuel), et, ce signal d'état du bus est avantageusement forcé à l'état occupé, afin de bloquer l'initiation d'une nouvelle transaction en réutilisant la fonction initiale du signal d'état.

Cela présente l'avantage de s'adapter parfaitement dans un système prévoyant ce type de signal d'état du bus, comme par exemple dans les protocoles de communication sur les bus du type architecture avancée de bus de microcontrôleur « AMBA » (pour « Advanced Microcontroller Bus Architecture » selon le terme usuel anglais).

Par exemple, une transaction comprenant une réponse transmise sur le bus, les réponses transmises sur le bus lorsque le signal d'état du bus est forcé à l'état occupé peuvent être communiquées au dispositif maître.

Le dispositif maître peut ainsi réceptionner les données et les « effacer » du bus, c'est-à-dire clore la transaction du point de vue du périphérique émetteur de la réponse.

Selon un mode de mise en oeuvre, une commande auxiliaire de réinitialisation est générée en cas de réception d'une commande de réinitialisation du dispositif maître, et si les transactions initiées par le dispositif maître sont à l'état non-terminé après expiration d'un temps de réponse maximal.

La commande auxiliaire permet ainsi de bénéficier d'une alternative dans le processus de réinitialisation en cas de problème conduisant à des transactions qui ne seraient jamais terminées.

La commande auxiliaire de réinitialisation peut par exemple être destinée à un dispositif de commande sécurisé, capable de prendre une décision sécurisée en la matière, ou éventuellement à commander en dernier recours une réinitialisation du système complet.

Il est proposé un système sur puce comprenant un bus et au moins un dispositif maître configuré pour initier des transactions sur le bus, dans lequel un circuit de gestion de réinitialisation comportant une entrée destinée à recevoir une commande de réinitialisation du dispositif maître, est configuré pour surveiller un état terminé ou non des transactions initiées par le dispositif maître, et, en cas de réception d'une commande de réinitialisation sur l'entrée, pour réinitialiser le dispositif maître de façon effective lorsque les transactions initiées par le dispositif maître sont à l'état terminé.

Selon un mode de réalisation, le circuit de gestion de réinitialisation est configuré pour détecter des signaux transitant sur des ports d'entrée et de sortie d'une interface entre le dispositif maître et le bus, afin de surveiller ledit état terminé ou non desdites transactions.

Selon un mode de réalisation, une transaction comprend une émission d'une requête sur le port de sortie de l'interface et une réception d'une réponse sur le port d'entrée de l'interface, et le circuit de gestion de réinitialisation est configuré pour surveiller ledit état terminé ou non desdites transactions en comptant le nombre de requêtes émises sur le port de sortie et en comptant le nombre de réponses reçues sur le port d'entrée, un nombre de réponses reçues égal au nombre de requêtes émises étant représentatif de l'état terminé des transactions initiées par le dispositif maître.

Le circuit de gestion de réinitialisation est configuré pour générer un signal de blocage au moment de la réception de la commande de réinitialisation du dispositif maître sur l'entrée, de façon à bloquer l'initiation d'une nouvelle transaction par le dispositif maître.

En cas de réception de la commande de réinitialisation du dispositif maître pendant la transmission d'une requête, le circuit de gestion de réinitialisation est avantageusement configuré pour générer le signal de blocage après la fin de la transmission de cette requête.

Avantageusement, le circuit de gestion de réinitialisation est configuré pour générer le signal de blocage en activant un signal de réinitialisation effective, et pour réinitialiser le dispositif maître de façon effective en désactivant le signal de réinitialisation effective, lorsque les transactions initiées par le dispositif maître sont à l'état terminé et lorsque la commande de réinitialisation reçu sur l'entrée a pris fin.

Avantageusement, une transaction comprend une réponse transmise sur le bus, et le circuit de gestion de réinitialisation est configuré pour ne pas communiquer au dispositif maître et effacer du bus les réponses transmises sur le bus lorsque le signal de réinitialisation effective est activé.

Selon un mode de réalisation, le circuit de gestion de réinitialisation est configuré pour générer le signal de blocage en transmettant au dispositif maître un signal d'état du bus forcé à l'état occupé, et pour réinitialiser le dispositif maître de façon effective en activant de façon impulsionnelle un signal de réinitialisation effective.

Avantageusement, une transaction comprend une réponse transmise sur le bus, et le circuit de gestion de réinitialisation est configuré pour communiquer au dispositif maître les réponses transmises sur le bus, lorsque le signal d'état du bus est forcé à l'état occupé.

Selon un mode de réalisation, le circuit de gestion de réinitialisation est configuré pour générer une commande auxiliaire de réinitialisation, en cas de réception d'une commande de réinitialisation du dispositif maître, et si les transactions initiées par le dispositif maître sont à l'état non-terminé après expiration d'un temps de réponse maximal.

D'autres avantages et caractéristiques de l'invention apparaîtront à l'examen de la description détaillée de modes de réalisation et de mise en oeuvre, nullement limitatifs, et des dessins annexés, sur lesquels :
[Fig 1]
[Fig 2]
[Fig 3]
[Fig 4]
[Fig 5]
[Fig 6]
[Fig 7]
[Fig 8]
[Fig 9]

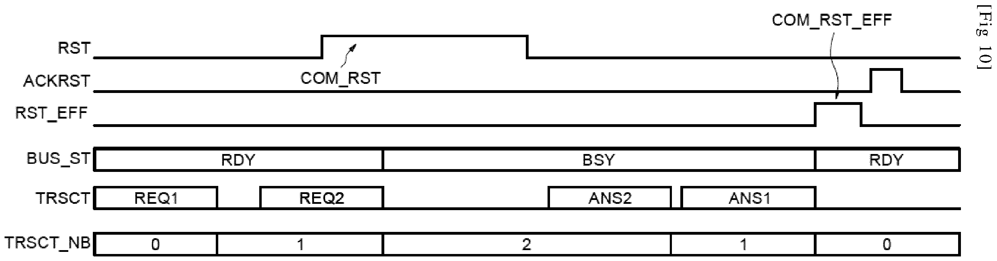

[Fig 10] illustrent des modes de réalisation et de mise en oeuvre de l'invention.

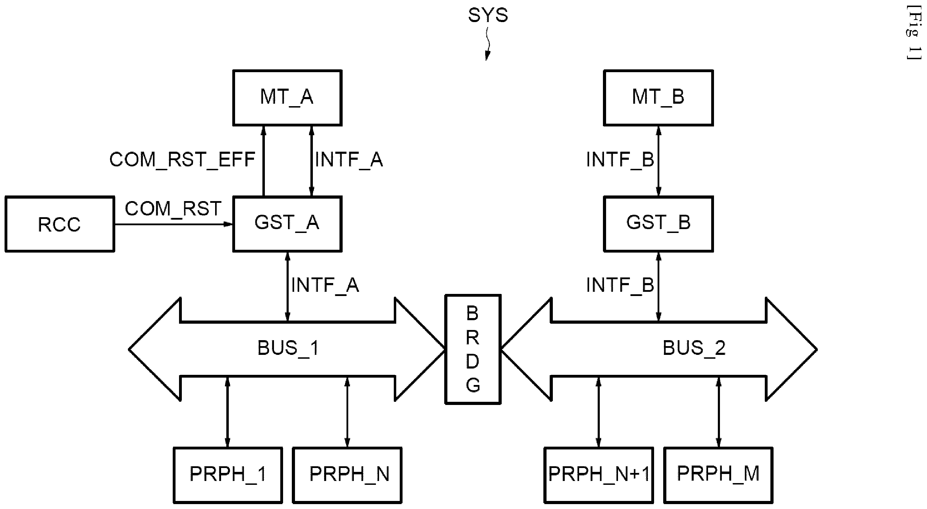

La figure 1 représente un système sur puce SYS comprenant un premier dispositif maître MT_A connecté sur un premier bus BUS_1 par l'intermédiaire d'une première interface INTF_A, ainsi qu'un deuxième dispositif maître MT_B connecté sur un deuxième bus BUS_2 par l'intermédiaire d'une deuxième interface INTF_B.

Les dispositifs maîtres MT_A, MT_B sont capables d'initier des transactions sur les bus BUS_1, BUS_2. Une transaction est initiée par l'émission d'une requête, et est close, ou terminée, par la réception d'une réponse à la requête.

Les dispositifs maîtres MT_A, MT_B peuvent par exemple être des unités de traitement, du type processeurs, de fonction centrale ou spéciale, ou encore des éléments de fonction particulière tel qu'un dispositif d'accès direct en mémoire DMA (pour « Direct Memory Access » en anglais).

Les dispositif maître MT_A, MT_B peuvent être capable d'alterner entre des fonctions du type maître ou du type esclaves sur des interfaces différentes, les interface INTF_A, INTF_B respectives étant les interfaces du type maître (les interfaces du type esclave ne sont pas représentées).

Des périphériques PRPH_1, PRPH_N, par exemple de fonctions du type esclave, sont connectés sur le premier bus BUS_1, et des périphériques PRPH_N+1, PRPH_M, par exemple de fonctions du type esclave, sont connectés sur le deuxième bus BUS_2.

Le premier bus BUS_1 et le deuxième bus BUS_2 sont dans cet exemple reliés par une passerelle BRDG permettant de traduire des communications d'un bus à l'autre.

Par exemple le premier bus BUS_1 peut être du type AXI (« Advanced eXtensible Interface » en anglais, et bien connu de l'homme de l'art) et le deuxième bus peut être du type AHB (« Advanced High-performance Bus » en anglais, et bien connu de l'homme de l'art)

Bien entendu, d'autres types de bus de système sur puce sont envisageable, notamment les bus usuellement nommées AMBA et bien connu par l'homme du métier (pour « Advanced Microcontroller Bus Architecture » en anglais), tels que les bus APB (« Advanced Peripheral Bus » en anglais) ou ASB (pour « Advanced System Bus » en anglais).

Par ailleurs, les deux bus BUS_1, BUS_2 peuvent être de même technologie et ne former qu'un seul et même bus, ou encore d'autres bus de technologies non-mentionnées ici pourraient être prévus dans le système sur puce SYS.

Le système sur puce SYS comporte un dispositif contrôleur d'horloge et de réinitialisation RCC destiné à fournir des signaux d'horloge (non représentés) et des commandes de réinitialisation COM_RST destinées notamment aux dispositifs maîtres MT_A, MT_B, et plus généralement aux périphériques connectés sur les bus BUS_1, BUS_2 du système sur puce SYS.

La voie de transmission des commandes de réinitialisation COM_RST n'est pas en relation avec les communications transmises sur les bus BUS_1, BUS_2 et, pour cette raison, est dite asynchrone.

Un circuit de gestion de réinitialisation GST_A, GST_B est prévu pour chaque, ou pour au moins un, dispositif maître MT_A, MT_B. Les circuits de gestion de réinitialisation GST_A, GST_B sont configurés pour recevoir la commande de réinitialisation asynchrone COM_RST destiné au dispositif maître respectif MT_A, MT_B.

Chaque circuit de gestion de réinitialisation GST_A, GST_B est configuré pour retransmettre au dispositif maître MT_A, MT_B correspondant une commande de réinitialisation COM_RST_EFF, de façon effective vis-à-vis de l'état des transactions en cours au moment de la commande de réinitialisation COM_RST.

En effet, chaque circuit de gestion de réinitialisation GST_A, GST_B comporte une entrée destinée à recevoir la commande de réinitialisation COM_RST du dispositif maître MT_A, MT_B, et est configuré pour surveiller un état terminé ou non des transactions initiées par le dispositif maître MT_A, MT_B. En cas de réception d'une commande de réinitialisation RST sur l'entrée, le circuit de gestion de réinitialisation GST_A, GST_B est configuré pour réinitialiser le dispositif maître MT_A, MT_B de façon effective lorsque les transactions initiées par le dispositif maître sont à l'état terminé. La réinitialisation du dispositif maître est faite au moyen de la commande de réinitialisation dite « effective » COM_RST_EFF.

Dans cet exemple, les circuits de gestion de réinitialisation GST_A, GST_B sont interposés aux interfaces INTF_A, INTF_B entre le dispositif maître respectif MT_A, MT_B et le bus respectif BUS_1, BUS_2, par exemple afin de détecter des signaux transitant sur des ports d'entrée et de sortie desdites interfaces INTF_A, INTF_B.

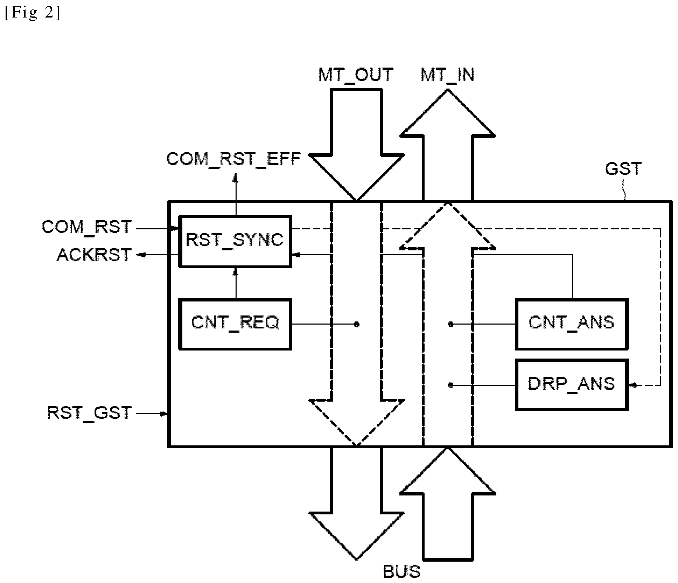

On se réfère à cet égard à la figure 2.

La figure 2 illustre un exemple de réalisation d'un circuit de gestion de réinitialisation GST tel que décrit précédemment en relation avec la figure 1.

Le circuit de gestion de réinitialisation GST est interposé à l'interface entre le dispositif maître respectif et le bus BUS. Le circuit de gestion de réinitialisation GST est configuré pour transmettre, sans modifier, des requêtes émises par le dispositif maître sur un port de sortie MT_OUT de l'interface et des réponses reçues sur un port d'entrée MT_IN de l'interface.

Dans un exemple d'interface comportant des registres d'entrée-sortie prévus pour faire transiter les données des transactions (usuellement désignés « register slice » en anglais), la surveillance de l'état terminé ou non-terminé des transactions initiées par le dispositif maître peut par exemple être faite sur lesdits registres.

Le circuit de gestion de réinitialisation GST comporte un élément de synchronisation RST_SYNC ayant une entrée connectée à la voie de transmission de commande de réinitialisation COM_RST émise par le dispositif contrôleur d'horloge et de réinitialisation RCC.

L'élément de synchronisation RST_SYNC est configuré pour synchroniser une commande de réinitialisation effective COM_RST_EFF, avec l'obtention d'un état terminé des transactions initiées sur le bus BUS par le dispositif maître.

Le circuit de gestion de réinitialisation GST comporte un compteur de requêtes CNT_REQ configuré pour compter le nombre de requêtes émises par le dispositif maître, et un compteur de réponses CNT_ANS configuré pour compter le nombre de réponses reçues.

Par exemple, le compteur de requêtes CNT_REQ est capable de détecter des signaux transitant sur le port de sortie MT_OUT de l'interface, pour compter lesdites requêtes ; et, de façon similaire, le compteur de réponse CNT_ANS est capable de détecter des signaux transitant sur le port d'entrée MT_IN de l'interface, pour compter lesdites réponses.

A cet effet, les compteurs peuvent se baser sur seulement une partie des signaux du protocole pour détecter une requête ou une réponse, et sont par exemple réalisés par un circuit de logique combinatoire.

Les nombres comptés sont communiqués à l'élément de synchronisation RST_SYNC, qui est configuré pour soustraire le nombre de réponses comptées au nombre de requêtes comptées, le résultat donnant le nombre de transaction en cours sur le bus BUS.

Avantageusement pour limiter la taille des compteurs, un même compteur peut être incrémenté pour chaque requête émise, et décrémenté pour chaque réponse reçue, de façon à être directement représentatif du nombre de transactions en cours sur le bus BUS.

En d'autres termes, les compteurs n'ont pas besoin d'effectuer une lecture des signaux et une analyse de leur contenu, mais la simple détection d'une présence d'un signal, par exemple en transit dans les registres d'entrée-sortie ou par une détection logique sur les signaux de protocole, permet d'effectuer les comptages pour surveiller l'état terminé ou non des transactions initiées par le dispositif maître

Ainsi, un nombre nul de transaction en cours sur le bus BUS est représentatif d'un état terminé des transactions initiées par le dispositif maître, tandis qu'un nombre non-nul de transaction en cours sur le bus BUS est représentatif d'un état non-terminé des transactions initiées par le dispositif maître.

Comme il apparaîtra plus en détails dans la suite, l'élément de synchronisation RST_SYNC est configuré pour générer un signal de blocage afin de bloquer l'initiation d'une nouvelle transaction par le dispositif maître, au moment de la réception de la commande de réinitialisation RST sur l'entrée.

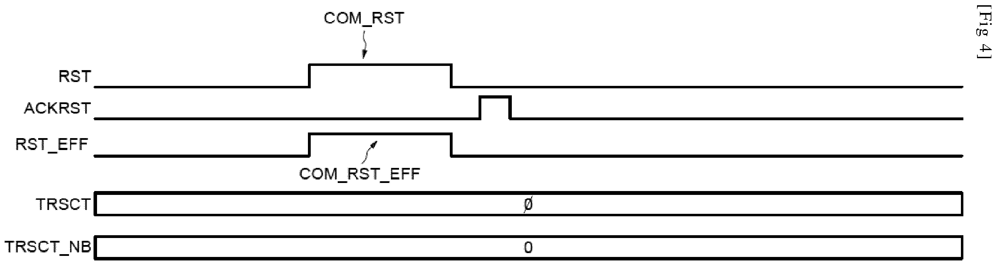

Le signal de blocage peut par exemple être matérialisé par une activation d'un signal de réinitialisation effective RST_EFF (figures 4 à 6) par lequel est portée la commande de réinitialisation effective COM_RST_EFF.

On notera une distinction entre la commande de réinitialisation effective et le signal de réinitialisation effective. En effet, la commande de réinitialisation effective communique une logique d'instruction, et est portée par le signal de réinitialisation effective. Le signal de réinitialisation effective peut avoir deux niveaux logiques, un niveau haut ou un niveau bas, dont les valeurs logiques et la traduction de ces valeurs en termes d'instruction sont choisis arbitrairement. On dira que le signal de réinitialisation effective est « activé » au niveau choisi pour produire un effet de commande, et que le signal de réinitialisation effective est « désactivé » au niveau de repos, choisi pour ne pas produire d'effet de commande propre. On définit de façon conventionnelle que le signal de réinitialisation effective est activé au niveau haut et désactivé au niveau bas. La commande de réinitialisation effective produit quant à elle une « remise à zéro » des éléments variables du dispositif maître ainsi qu'un blocage de son activité sur le bus lorsque le signal de réinitialisation effective est activé, puis un redémarrage à l'état initial et un fonctionnement normal du dispositif maître sont permis lorsque le signal de réinitialisation effective est désactivé.

Ainsi, dans cet exemple, l'élément de synchronisation RST_SYNC active le signal de réinitialisation effective RST_EFF (figures 4 à 6) pour bloquer l'initiation d'une nouvelle transaction par le dispositif maître, et désactive le signal de réinitialisation effective RST_EFF lorsque les transactions initiées sur le bus BUS sont à l'état terminé, et que la commande de réinitialisation RST est terminée.

L'élément de synchronisation RST_SYNC peut être configuré pour fournir un signal de confirmation de réinitialisation ACKRST (usuellement « acknowledgment » en anglais), après la réinitialisation effective.

Dans cet exemple particulier de réalisation, le circuit de gestion de réinitialisation GST comporte en outre un élément de réception ANS_DRP configuré pour effacer du bus d'éventuelles réponses transmises lorsque le dispositif maître est bloqué de la sorte. Les réponses reçues lorsque le dispositif maître est bloqué ne sont pas communiquées au dispositif maître.

Par « effacées du bus », on entend que les réponses sont reçues, et éventuellement qu'un signal de confirmation (par exemple du type « acknowledgement » en anglais) est émis à destination du périphérique émetteur de la réponse, de manière à clore la transaction sur le bus BUS correctement selon le protocole utilisé.

Par ailleurs, le circuit de gestion de réinitialisation GST peut comporter une entrée de réinitialisation propre, destinée à recevoir un signal de réinitialisation RST_GST dédié au circuit de gestion de réinitialisation GST. Cela est prévu notamment pour une commande de réinitialisation du système complet, y compris du circuit de gestion de réinitialisation GST, pour repartir d'un état vierge.

On se réfère désormais aux figures 3 à 6.

La figure 3 est un diagramme fonctionnel illustrant un exemple d'exécution de la réinitialisation d'un dispositif maître, mise en oeuvre par un circuit de gestion de réinitialisation GST tel que décrit précédemment en relation avec la figure 2.

Les figures 4, 5 et 6 sont des diagrammes temporels représentant les signaux en jeu lors de l'exécution de la réinitialisation selon cet exemple, et pour différentes situations.

Dans les dessins, par concision, le terme « réinitialisation » est remplacé par le terme anglais usuel « reset ».

A une étape 310 du procédé de réinitialisation du dispositif maître 300, une commande de réinitialisation du dispositif maître est reçue.

Le procédé comprend d'une part une étape 320 de vérification si une transaction est en train d'être initiée par le dispositif maître, c'est-à-dire si la génération d'une requête est en cours. Par exemple, le compteur de requête CNT_REQ peut être prévu à cet effet et transmettre l'information à l'élément de synchronisation RST_SYNC.

Si une requête est en cours de génération lors de la réception de la commande de réinitialisation 310, alors l'étape 320 attend (Y) jusqu'à ce que la requête ait fini d'être générée.

S'il n'y a pas de génération de requête en cours ou lorsque la requête a fini d'être générée (N), alors le signal de réinitialisation effective est activé à l'étape 330, de façon à bloquer l'initiation d'une nouvelle transaction par le dispositif maître.

Ensuite, à une étape 340, le procédé attend (Y) qu'il n'y ait plus de réponse en attente aux requête précédemment initiées par le dispositif maître. En d'autres termes, l'étape 340 correspond à la surveillance d'un état terminé ou non des transactions initiées par le dispositif maître.

Après l'étape 340, lorsque toutes les réponses en attente sont reçues, et donc que les transactions initiées sont à l'état terminé (N), le procédé comprend une étape 350 de vérification que la commande de réinitialisation a pris fin, et éventuellement d'attente (N) que la commande de réinitialisation prenne fin.

Comme mentionné précédemment pour la commande de réinitialisation effective, la commande de réinitialisation reçue à l'étape 310 comprend l'activation d'un signal, et prend fin lorsque que ce signal est désactivé.

Enfin, à l'étape 360, le signal de réinitialisation effective est désactivé après que les transactions initiées soient à l'état terminé 340 (Y), et après que le signal de commande de réinitialisation soit désactivé 350 (N). En outre, après l'étape 360, le procédé peut comprendre la transmission du signal de confirmation de réinitialisation ACKRST (non représentée).

La figure 4 représente les signaux générés lors du procédé 300 dans le cas où aucune transaction TRSCT n'a été initiée avant ou pendant la réception de la commande de réinitialisation COM_RST. Ainsi, le nombre de transactions en cours TRSCT_NB est nul, et le signal de réinitialisation effective RST_EFF est activé et désactivé en même temps que le signal de réinitialisation RST. En d'autres termes, la réinitialisation effective COM_RST_EFF est commandée au dispositif maître en même temps que la commande de réinitialisation COM_RST est reçue.

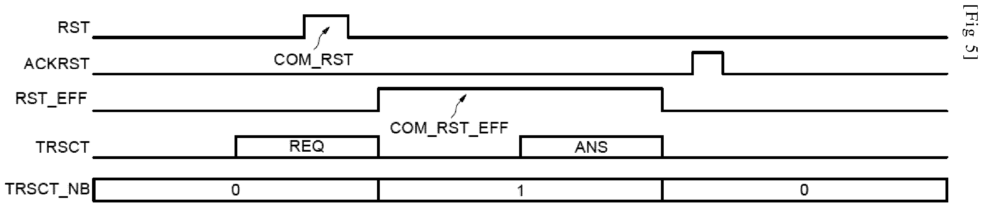

La figure 5 représente les signaux générés lors du procédé 300 dans le cas où une transaction TRSCT est initiée par le dispositif maître pendant la réception de la commande de réinitialisation COM_RST. Ainsi, le signal de réinitialisation effective RST_EFF est activé après la fin de la génération de la requête REQ, et le nombre de transactions en cours TRSCT_NB vaut 1, ce qui est représentatif d'un état non-terminé des transactions initiées par le dispositif. Le signal de réinitialisation est maintenu activé jusqu'à ce que le nombre de transactions en cours TRSCT_NB devienne nul. A l'issue de la réception de la réponse ANS à la requête REQ, le nombre de transactions en cours TRSCT_NB est nul, les transactions initiées par le dispositif maître sont donc à l'état terminé, et le signal de réinitialisation effective RST_EFF est désactivé. Après la commande de réinitialisation effective COM_RST_EFF, la confirmation ACKRST peut être transmise.

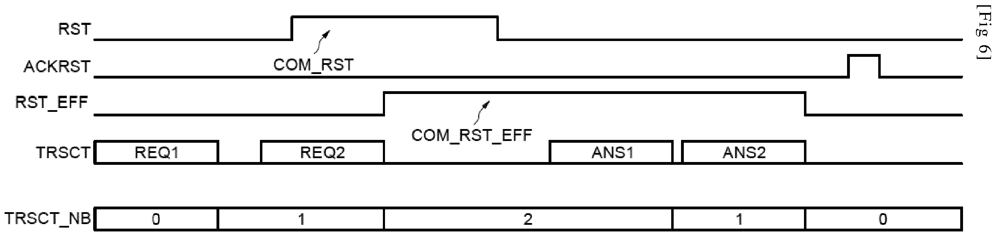

La figure 6 représente les signaux générés lors du procédé 300 dans le cas où des transactions TRSCT sont initiées par le dispositif maître avant et pendant la réception de la commande de réinitialisation COM_RST. Le nombre de transactions en cours TRSCT _NB est donc à 1 au moment de la réception de la commande de réinitialisation COM_RST, et porté à 2 à l'issue de la génération d'une deuxième requête REQ2. Le nombre de transaction en cours TRSCT_NB revient à 1 après la réception de la réponse ANS 1 à la première requête REQ1, et devient nul après la réception de la réponse ANS2 à deuxième requête REQ2. Les réponses ANS 1, ANS2 ne sont pas communiquées au dispositif maître et sont effacées du bus. Lorsque les transactions initiées par le dispositif maître sont à l'état terminé (i.e. le nombre de transactions en cours TRSCT_NB est nul), le signal de réinitialisation effective RST_EFF est désactivé et la confirmation ACKRST peut être transmise.

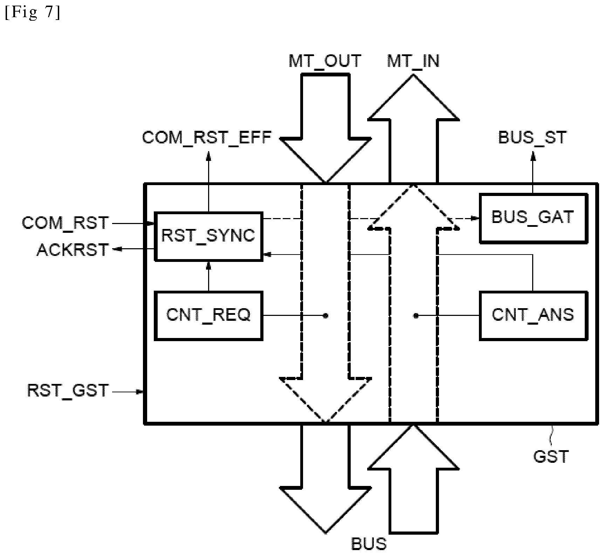

La figure 7 illustre un exemple de réalisation du circuit de gestion de réinitialisation GST en alternative à l'exemple décrit précédemment en relation avec la figure 2. Les éléments communs entre ces exemples de réalisation supportent néanmoins les mêmes références et ne seront pas tous détaillés à nouveau dans la suite.

Cet exemple diffère de l'exemple en relation avec la figure 2 en ce que le circuit GST ne comporte pas l'élément de réception ANS_DRP, mais comporte un circuit de blocage BUS_GAT configuré pour transmettre un signal d'état BUS_ST du bus BUS au dispositif maître.

Le signal d'état BUS_ST est destiné à réaliser une procédure d'établissement de liaison (« handshake » en anglais) entre le dispositif maître et le bus BUS, afin de déterminer si le bus BUS peut accepter une nouvelle requête. Le signal d'état BUS_ST peut typiquement avoir un état prêt (« ready » en anglais) ou un état occupé (« busy » en anglais).

Ce type de signal d'état BUS_ST est par exemple utilisé dans la communication sur un bus d'interface extensive avancée « AXI » (pour « Advanced eXtensible Interface » en anglais).

Sommairement, dans la procédure d'établissement de liaison dans le protocole AXI, un signal de validité « valid » est envoyé par le dispositif maître pour informer le périphérique de destination que les informations sur le bus BUS peuvent être lues. Le signal d'état BUS_ST est fourni par un system de gestion de flux, intégré au bus BUS pour informer que le bus est prêt, et donc opérationnel pour accepter une nouvelle transaction, ou qu'il est occupé et donc pas opérationnel pour accepter une nouvelle transaction. Si un signal occupé est transmis au dispositif maître, alors ce dernier ne peut pas envoyer de nouvelle requête.

Le circuit de gestion de réinitialisation GST peut être configuré pour retransmettre le signal d'état BUS_ST reçu sur le bus BUS, en fonctionnement normal.

Et, en cas de réception d'une commande de réinitialisation COM_RST, l'élément de synchronisation est avantageusement configuré pour forcer le signal d'état BUS_ST à l'état occupé, afin de bloquer l'initiation d'une nouvelle transaction par le dispositif maître.

Ainsi, dans cet exemple, la génération du signal de blocage permettant de bloquer l'initiation d'une nouvelle transaction par le dispositif maître, est exécutée par le forçage à l'état occupé du signal d'état BUS_ST.

Dans cet exemple, les réponses transmises sur le bus lorsque le signal d'état du bus BUS_ST est forcé à l'état occupé sont communiquées normalement au dispositif maître.

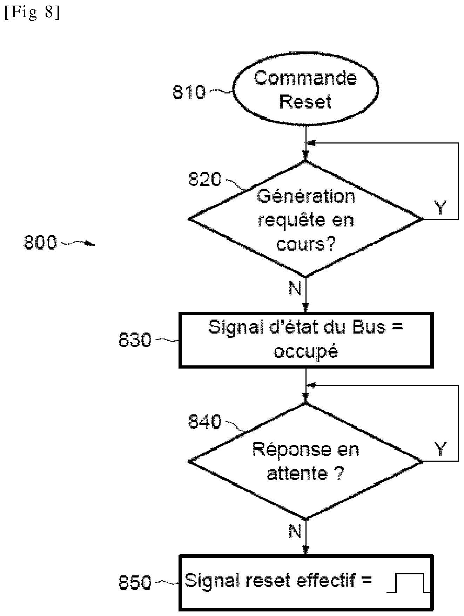

On se réfère désormais aux figures 8 à 10.

La figure 8 est un diagramme fonctionnel illustrant l'exécution de la réinitialisation d'un dispositif maître, mise en oeuvre par un circuit de gestion de réinitialisation GST tel que décrit précédemment en relation avec la figure 7.

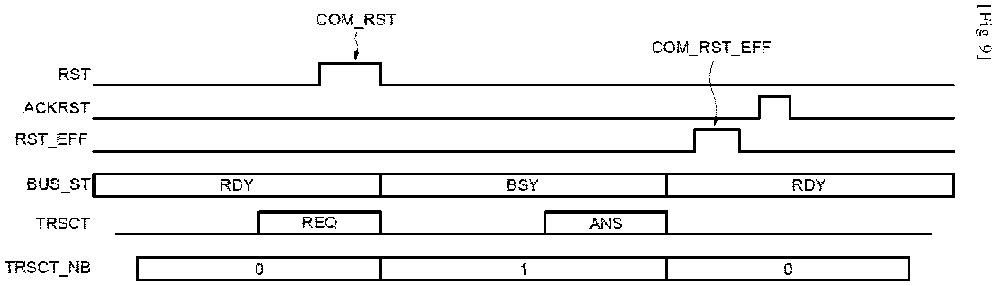

Les figures 9 et 10 sont des diagrammes temporels représentant les signaux en jeu lors de l'exécution de la réinitialisation selon cet exemple, et pour différentes situations.

A une étape 810 du procédé de réinitialisation du dispositif maître 800, une commande de réinitialisation du dispositif maître est reçue.

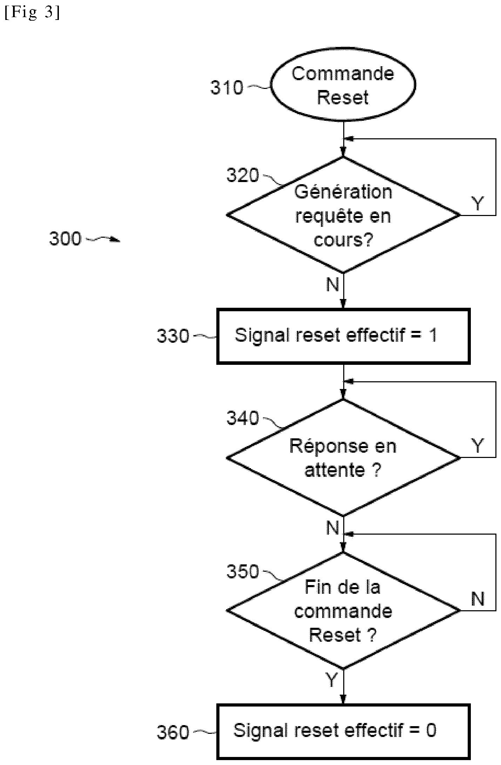

Le procédé comprend une étape de vérification 820 si une transaction est en train d'être initiée par le dispositif maître, similaire à l'étape de vérification 320 décrite précédemment en relation avec la figure 3.

S'il n'y a pas de génération de requête en cours ou lorsque la requête a fini d'être générée (N), alors le signal d'état du bus est forcé à l'état occupé BSY, lors d'une étape 830, de façon à bloquer l'initiation d'une nouvelle transaction par le dispositif maître.

Une étape de surveillance 840 attend (Y) un état terminé des transactions initiées par le dispositif maître.

Après l'étape 840, lorsque toutes les réponses en attente sont reçues, et donc que les transactions initiées sont à l'état terminé (N), la commande de réinitialisation effective est générée lors d'une étape 850. La réinitialisation effective est commandée par une impulsion du signal de réinitialisation effective, c'est-à-dire une activation du signal pendant une durée suffisamment longue pour réinitialiser le dispositif maître, et une désactivation du signal.

Bien entendu, une étape de vérification (non représentée) similaire à l'étape de vérification 350 décrite précédemment en relation avec la figure 3 peut être prévue entre l'étape de surveillance 840 et l'étape de génération de la commande de réinitialisation effective 850.

Et, après l'étape 850, le procédé 800 peut aussi comprendre la transmission du signal de confirmation de réinitialisation ACKRST (non représenté).

La figure 9 représente les signaux générés lors du procédé 800 dans le cas où une transaction TRSCT est initiée par le dispositif maître pendant la réception de la commande de réinitialisation COM_RST. Ainsi, le signal d'état du bus BUS_ST est initialement à l'état prêt RDY, et est forcé à l'état occupé BSY après la fin de la génération de la requête REQ. Bien entendu, le nombre de transactions en cours TRSCT_NB passe à 1, et représente un état non-terminé des transactions initiées par le dispositif maître. Le signal d'état du bus BUS_ST est occupé BSY jusqu'à ce que le nombre de transactions en cours TRSCT_NB devienne nul. A l'issue de la réception de la réponse ANS à la requête REQ, le nombre de transactions en cours TRSCT_NB est nul, ce qui représente un état terminé des transactions initiées par le dispositif maître. En conséquence, la commande de réinitialisation effective COM_RST_EFF est générée sous la forme d'une activation impulsionnelle du signal de réinitialisation effective RST_EFF. En outre, le signal d'état du bus BUS_ST n'est plus forcé et reprend sa fonction d'établissement de liaison et repasse par exemple à l'état prêt RDY. Après la commande de réinitialisation effective COM_RST_EFF, la confirmation ACKRST peut être transmise.

La figure 10 représente les signaux générés lors du procédé 800 dans le cas où des transactions TRSCT sont initiées par le dispositif maître avant et pendant la réception de la commande de réinitialisation COM_RST. Le nombre de transaction en cours TRSCT _NB est donc à 1 au moment de la réception de la commande de réinitialisation COM_RST. Avant de recevoir la commande de réinitialisation COM_RST, le signal d'état du bus BUS_ST n'est pas forcé à l'état occupé (BSY) et reste prêt RDY. A l'issue de la génération d'une deuxième requête REQ2, le nombre de transaction en cours TRSCT_NB est porté à 2, et, étant représentatif d'un état non-terminé des transactions sur le bus, le signal d'état du bus BUS_ST est forcé à l'état occupé BSY. Le nombre de transaction en cours TRSCT_NB revient à 1 après la réception de la réponse ANS2 à la deuxième requête REQ2, et devient nul après la réception de la réponse ANS1 à première requête REQ1. Les réponses ANS2, ANS1 sont communiquées au dispositif maître normalement. Lorsque les transactions initiées par le dispositif maître sont à l'état terminé (i.e. le nombre de transaction en cours TRSCT_NB est nul), la commande de réinitialisation effective COM_RST_EFF est générée sous la forme d'une impulsion dans le signal de réinitialisation effective RST_EFF, le signal d'état du bus BUS_ST repasse à l'état prêt RDY et la confirmation ACKRST peut être transmise.

Les réponses ANS2, ANS1 peuvent être reçues dans un ordre différent de l'ordre d'émission des requêtes REQ1, REQ2. On remarquera que de façon avantageusement simple et polyvalente, la surveillance ne comprend pas une identification des réponses reçues, et ne tient donc pas compte de l'ordre de réception des réponse reçues pour évaluer l'état terminé ou non des transactions initiées par le maître.

Par ailleurs, tous les modes de réalisation et de mise en oeuvre décrit précédemment en relation avec les figures 1 à 10 peuvent prévoir une commande auxiliaire de réinitialisation générée, si les transactions initiées par le dispositif maître sont à l'état non-terminé après expiration d'un temps de réponse maximal.

Par exemple un chronomètre peut être prévu dans les circuits de gestions de réinitialisation GST, dont l'action pourrait être situé, dans boucle ( Y ) des étapes d'attente de réception de réponse 340, 840 (en relation avec les figures 3 et 8) de la surveillance d'un état terminé ou non des transactions initiées par le dispositif maître. Et, si au-delà d'une durée maximale arbitrairement choisie les transactions initiées sont restées à l'état non-terminé, alors la commande de réinitialisation auxiliaire peut être transmis à un éventuel dispositif de contrôle sécurisé, ou par exemple afin de réinitialiser tous les périphériques du système sur puce, en tant que solution de dernier recours.

## Revendications

1. Procédé de réinitialisation d'un dispositif maître (MT_A, MT_B) configuré pour initier des transactions (TRSCT) sur un bus (BUS_1, BUS_2) d'un système sur puce (SYS), comprenant une surveillance d'un état terminé ou non des transactions (TRSCT) initiées par le dispositif maître, et, en cas de réception d'une commande de réinitialisation (COM_RST) du dispositif maître, une réinitialisation effective (COM_RST_EFF) du dispositif maître lorsque les transactions initiées par le dispositif maître sont à l'état terminé, dans lequel un signal de blocage est généré au moment de la réception de la commande de réinitialisation (COM_RST) du dispositif maître, de façon à bloquer l'initiation d'une nouvelle transaction par le dispositif maître (MT_A, MT_B),
**caractérisé en ce que**
en cas de réception de la commande de réinitialisation (COM_RST) du dispositif maître pendant la transmission d'une requête, le signal de blocage est généré après la fin de la transmission de cette requête.

2. Procédé selon la revendication 1, dans lequel ladite surveillance comprend une détection de signaux transitant sur des ports d'entrée (MT_IN) et de sortie (MT_OUT) d'une interface entre le dispositif maître et le bus (INTF_A, INTF_B).

3. Procédé selon la revendication 2, dans lequel une transaction comprend une émission d'une requête (REQ) sur le port de sortie (MT_OUT) de l'interface et une réception d'une réponse (ANS) sur le port d'entrée (MT_IN) de l'interface, et ladite surveillance comprend un comptage du nombre de requêtes émises (CNT_REQ) sur le port de sortie et un comptage du nombre de réponses reçues (CNT_ANS) sur le port d'entrée, un nombre de réponses reçues égal au nombre de requêtes émises étant représentatif de l'état terminé des transactions (TRSCT) initiées par le dispositif maître.

4. Procédé selon la revendication 1, dans lequel la génération du signal de blocage comprend une activation d'un signal de réinitialisation effective (RST_EFF), et la réinitialisation effective (COM_RST_EFF) du dispositif maître comprend une désactivation du signal de réinitialisation effective (RST_EFF), lorsque les transactions initiées par le dispositif maître sont à l'état terminé et lorsque la commande de réinitialisation reçue (COM_RST) a pris fin.

5. Procédé selon la revendication 4, dans lequel une transaction comprend une réponse (ANS) transmise sur le bus, et les réponses transmises sur le bus lorsque le signal de réinitialisation effective (RST_EFF) est activé ne sont pas communiquées au dispositif maître (MT_A, MT_B) et sont effacées du bus.

6. Procédé selon la revendication 1, dans lequel la génération du signal de blocage comprend une transmission au dispositif maître (MT_A, MT_B) d'un signal d'état du bus (BUS_ST) forcé à l'état occupé (BSY), la réinitialisation effective (COM_RST_EFF) du dispositif maître comprenant une activation impulsionnelle d'un signal de réinitialisation effective (RST_EFF).

7. Procédé selon la revendication 6, dans lequel une transaction comprend une réponse (ANS) transmise sur le bus, et les réponses transmises sur le bus lorsque le signal d'état du bus (BUS_ST) est forcé à l'état occupé (BSY) sont communiquées au dispositif maître (MT_A, MT_B).

8. Procédé selon l'une des revendications précédentes, dans lequel, une commande auxiliaire de réinitialisation est générée en cas de réception d'une commande de réinitialisation (COM_RST) du dispositif maître, et si les transactions (TRSCT) initiées par le dispositif maître sont à l'état non-terminé après expiration d'un temps de réponse maximal.

9. Système sur puce comprenant un bus (BUS_1, BUS_2) et au moins un dispositif maître (MT_A, MT_B) configuré pour initier des transactions sur le bus, dans lequel un circuit de gestion de réinitialisation (GST_A, GST_B) comportant une entrée destinée à recevoir une commande de réinitialisation du dispositif maître (COM_RST), est configuré pour surveiller un état terminé ou non des transactions initiées par le dispositif maître, et, en cas de réception d'une commande de réinitialisation (COM_RST) sur l'entrée, pour réinitialiser (COM_RST_EFF) le dispositif maître de façon effective lorsque les transactions initiées par le dispositif maître sont à l'état terminé, dans lequel le circuit de gestion de réinitialisation (GST) est configuré pour générer un signal de blocage au moment de la réception de la commande de réinitialisation (COM_RST) du dispositif maître sur l'entrée, de façon à bloquer l'initiation d'une nouvelle transaction par le dispositif maître,
**caractérisé en ce que**
en cas de réception de la commande de réinitialisation (COM_RST) du dispositif maître pendant la transmission d'une requête, le circuit de gestion de réinitialisation (GST) est configuré pour générer le signal de blocage après la fin de la transmission de cette requête.

10. Système sur puce selon la revendication 9, dans lequel le circuit de gestion de réinitialisation (GST_A, GST_B) est configuré pour détecter des signaux transitant sur des ports d'entrée (MT_IN) et de sortie (MT_OUT) d'une interface (INTF_A, INTF_B) entre le dispositif maître et le bus, afin de surveiller ledit état terminé ou non desdites transactions.

11. Système sur puce selon la revendication 10, dans lequel une transaction comprend une émission d'une requête (REQ) sur le port de sortie (MT_OUT) de l'interface et une réception d'une réponse (ANS) sur le port d'entrée (MT_IN) de l'interface, et le circuit de gestion de réinitialisation (GST) est configuré pour surveiller ledit état terminé ou non desdites transactions en comptant le nombre de requêtes (CNT_REQ) émises sur le port de sortie et en comptant le nombre de réponses (CNT_ANS) reçues sur le port d'entrée, un nombre de réponses reçues égal au nombre de requêtes émises étant représentatif de l'état terminé des transactions initiées par le dispositif maître.

12. Système sur puce selon la revendication 9, dans lequel le circuit de gestion de réinitialisation (GST) est configuré pour générer le signal de blocage en activant un signal de réinitialisation effective (RST_EFF), et pour réinitialiser (COM_RST_EFF) le dispositif maître de façon effective en désactivant le signal de réinitialisation effective (RST_EFF), lorsque les transactions initiées par le dispositif maître sont à l'état terminé et lorsque la commande de réinitialisation (COM_RST) reçue sur l'entrée a pris fin.

13. Système sur puce selon la revendication 12, dans lequel une transaction comprend une réponse (ANS) transmise sur le bus, le circuit de gestion de réinitialisation (GST) est configuré pour ne pas communiquer au dispositif maître et effacer du bus les réponses transmises sur le bus lorsque le signal de réinitialisation effective (RST_EFF) est activé.

14. Système sur puce selon la revendication 9, dans lequel le circuit de gestion de réinitialisation (GST) est configuré pour générer le signal de blocage en transmettant au dispositif maître un signal d'état du bus (BUS_ST) forcé à l'état occupé (BSY), et pour réinitialiser (COM_RST_EFF) le dispositif maître de façon effective en activant de façon impulsionnelle un signal de réinitialisation effective (RST_EFF).

15. Système sur puce selon la revendication 14, dans lequel une transaction comprend une réponse (ANS) transmise sur le bus, et le circuit de gestion de réinitialisation (GST) est configuré pour communiquer au dispositif maître les réponses transmises sur le bus lorsque le signal d'état du bus (BUS_ST) est forcé à l'état occupé (BSY).

16. Système sur puce selon l'une des revendications 9 à 15, dans lequel le circuit de gestion de réinitialisation (GST) est configuré pour générer une commande auxiliaire de réinitialisation, en cas de réception d'une commande de réinitialisation (COM_RST) du dispositif maître, et si les transactions initiées par le dispositif maître sont à l'état non-terminé après expiration d'un temps de réponse maximal.

## Patentansprüche

1. Verfahren zum Zurücksetzen einer Hauptvorrichtung (MT_A, MT_B), die dazu konfiguriert ist, Transaktionen (TRSCT) auf einem Bus (BUS_1, BUS_2) eines System-on-Chip (SYS) zu initiieren, umfassend das Überwachen eines abgeschlossenen oder nicht abgeschlossenen Status der durch die Hauptvorrichtung initiierten Transaktionen (TRSCT) und, im Falle des Empfangens eines Rücksetzbefehls (COM_RST) von der Hauptvorrichtung, das wirksame Zurücksetzen (COM_RST_EFF) der Hauptvorrichtung, wenn sich die durch die Hauptvorrichtung initiierten Transaktionen in dem abgeschlossenen Status befinden, wobei im Moment des Empfangens des Rücksetzbefehls (COM_RST) von der Hauptvorrichtung ein Blockierungssignal generiert wird, um das Initiieren einer neuen Transaktion durch die Hauptvorrichtung (MT_A, MT_B) zu blockieren,
**dadurch gekennzeichnet, dass**
im Falle des Empfangens des Rücksetzbefehls (COM_RST) von der Hauptvorrichtung während des Übertragens einer Anfrage das Blockierungssignal nach dem Ende des Übertragens der Anfrage generiert wird.

2. Verfahren nach Anspruch 1, wobei das Überwachen das Erkennen von Signalen umfasst, die Eingangs- (MT_IN) und Ausgangsports (MT_OUT) einer Schnittstelle zwischen der Hauptvorrichtung und dem Bus (INTF_A, INTF_B) durchqueren.

3. Verfahren nach Anspruch 2, wobei eine Transaktion das Senden einer Anfrage (REQ) am Ausgangsport (MT_OUT) der Schnittstelle und das Empfangen einer Antwort (ANS) am Eingangsport (MT_IN) der Schnittstelle umfasst und das Überwachen das Zählen der Anzahl der am Ausgangsport gesendeten Anfragen (CNT_REQ) und das Zählen der Anzahl der am Eingangsport empfangenen Antworten (CNT_ANS) umfasst, wobei eine Anzahl von empfangenen Antworten gleich der Anzahl von ausgegebenen Anfragen repräsentativ für den abgeschlossenen Status der durch die Hauptvorrichtung initiierten Transaktionen (TRSCT) ist.

4. Verfahren nach Anspruch 1, wobei das Generieren des Blockierungssignals das Aktivieren eines wirksamen Rücksetzsignals (RST_EFF) umfasst und das wirksame Zurücksetzen (COM_RST_EFF) der Hauptvorrichtung das Deaktivieren des wirksamen Rücksetzsignals (RST_EFF) umfasst, wenn sich die durch die Hauptvorrichtung initiierten Transaktionen im abgeschlossenen Status befinden und wenn der empfangene Rücksetzbefehl (COM_RST) beendet ist.

5. Verfahren nach Anspruch 4, wobei eine Transaktion eine auf dem Bus übertragene Antwort (ANS) umfasst und, wenn das wirksame Rücksetzsignal (RST_EFF) auf dem Bus aktiviert ist, die übertragenen Antworten nicht an die Hauptvorrichtung (MT_A, MT_B) kommuniziert und vom Bus gelöscht werden.

6. Verfahren nach Anspruch 1, wobei das Erzeugen des Blockierungssignals das Übertragen eines in den Besetzt-Status (BSY) erzwungenen Busstatussignals (BUS_ST) an die Hauptvorrichtung (MT_A, MT_B) umfasst, wobei das wirksame Zurücksetzen (COM_RST_EFF) der Hauptvorrichtung das pulsartige Aktivieren eines wirksamen Rücksetzsignals (RST_EFF) umfasst.

7. Verfahren nach Anspruch 6, wobei eine Transaktion eine auf dem Bus übertragene Antwort (ANS) umfasst und, wenn das Busstatussignal (BUS_ST) in den Besetzt-Status (BSY) gezwungen wird, die auf dem Bus übertragenen Antworten an die Hauptvorrichtung (MT_A, MT_B) kommuniziert werden.

8. Verfahren nach einem der vorhergehenden Ansprüche, wobei im Falle des Empfangens eines Rücksetzbefehls (COM_RST) der Hauptvorrichtung, und wenn sich die durch die Hauptvorrichtung initiierten Transaktionen (TRSCT) nach Ablauf einer maximalen Antwortzeit in dem nicht abgeschlossenen Status befinden, ein Hilfs-Rücksetzbefehl generiert wird.

9. System-on-Chip, das einen Bus (BUS_1, BUS_2) und mindestens eine Hauptvorrichtung (MT_A, MT_B) umfasst, die dazu konfiguriert ist, Transaktionen auf dem Bus zu initiieren, wobei eine Rücksetz-Verwaltungsschaltung (GST_A, GST_B), die einen Eingang umfasst, der dazu bestimmt ist, einen Rücksetzbefehl von der Hauptvorrichtung (COM_RST) zu empfangen, dazu konfiguriert ist, den abgeschlossenen oder nicht abgeschlossenen Status der durch die Hauptvorrichtung initiierten Transaktionen zu überwachen und im Falle des Empfangens eines Rücksetzbefehls (COM_RST) am Eingang die Hauptvorrichtung effektiv zurückzusetzen (COM_RST_EFF), wenn sich die durch die Hauptvorrichtung initiierten Transaktionen im abgeschlossenen Status befinden, wobei die Rücksetz-Verwaltungsschaltung (GST) dazu konfiguriert ist, im Moment des Empfangens des Rücksetzbefehls (COM_RST) von der Hauptvorrichtung am Eingang ein Blockierungssignal zu generieren, um das Initiieren einer neuen Transaktion durch die Hauptvorrichtung zu blockieren,
**dadurch gekennzeichnet, dass**
die Rücksetz-Verwaltungsschaltung (GST) im Falle des Empfangens des Rücksetzbefehls (COM_RST) von der Hauptvorrichtung während des Übertragens einer Anfrage dazu konfiguriert ist, das Blockierungssignal nach dem Ende des Übertragens der Anfrage zu generieren.

10. System-on-Chip nach Anspruch 9, wobei die Rücksetz-Verwaltungsschaltung (GST_A, GST_B) dazu konfiguriert ist, Signale zu erkennen, die Eingangs- (MT_IN) und Ausgangsports (MT_OUT) einer Schnittstelle (INTF_A, INTF_B) zwischen der Hauptvorrichtung und dem Bus durchqueren, um den abgeschlossenen oder nicht abgeschlossenen Status der Transaktionen zu überwachen.

11. System-on-Chip nach Anspruch 10, wobei eine Transaktion das Senden einer Anfrage (REQ) am Ausgangsport (MT_OUT) der Schnittstelle und das Empfangen einer Antwort (ANS) am Eingangsport (MT_IN) der Schnittstelle umfasst, und die Rücksetz-Verwaltungsschaltung (GST) dazu konfiguriert ist, den abgeschlossenen oder nicht abgeschlossenen Status der Transaktionen zu überwachen, indem sie die Anzahl der am Ausgangsport gesendeten Anfragen (CNT_REQ) und die Anzahl der am Eingangsport empfangenen Antworten (CNT_ANS) vergleicht, wobei eine Anzahl von empfangenen Antworten gleich der Anzahl von ausgegebenen Anfragen repräsentativ für den abgeschlossenen Status der durch die Hauptvorrichtung initiierten Transaktionen ist.

12. System-on-Chip nach Anspruch 9, wobei die Rücksetz-Verwaltungsschaltung (GST) dazu konfiguriert ist, das Blockierungssignal zu generieren, indem sie ein wirksames Rücksetzsignal (RST_EFF) aktiviert, und die Hauptvorrichtung wirksam zurückzusetzen (COM_RST_EFF), indem sie das wirksame Rücksetzsignal (RST_EFF) deaktiviert, wenn sich die durch die Hauptvorrichtung initiierten Transaktionen im abgeschlossenen Status befinden und wenn der empfangene Rücksetzbefehl (COM_RST) beendet ist.

13. System-on-Chip nach Anspruch 12, wobei eine Transaktion eine auf dem Bus übertragene Antwort (ANS) umfasst, die Rücksetz-Verwaltungsschaltung (GST) dazu konfiguriert ist, nicht mit der Hauptvorrichtung zu kommunizieren und die auf dem übertragenen Antworten von dem Bus zu löschen, wenn das wirksame Rücksetzsignal (RST_EFF) aktiviert ist.

14. System-on-Chip nach Anspruch 9, wobei die Rücksetz-Verwaltungsschaltung (GST) dazu konfiguriert ist, das Blockierungssignal zu generieren, indem sie ein in den Besetzt-Status (BSY) gezwungenes Busstatussignal (BUS_ST) an die Hauptvorrichtung überträgt, und die Hauptvorrichtung wirksam zurückzusetzen (COM_RST_EFF), indem sie ein wirksames Rücksetzsignal (RST_EFF) impulsartig aktiviert.

15. System-on-Chip nach Anspruch 14, wobei eine Transaktion eine auf dem Bus übertragene Antwort (ANS) umfasst und die Rücksetz-Verwaltungsschaltung (GST) dazu konfiguriert ist, die auf dem Bus übertragenen Antworten an die Hauptvorrichtung zu kommunizieren, wenn das Busstatussignal (BUS_ST) in den Besetzt-Status (BSY) gezwungen wird.

16. System-on-Chip nach einem der Ansprüche 9 bis 15, wobei die Rücksetz-Verwaltungsschaltung (GST) dazu konfiguriert ist, im Falle des Empfangens eines Rücksetzbefehls (COM_RST) von der Hauptvorrichtung, und wenn sich die durch die Hauptvorrichtung initiierten Transaktionen nach Ablauf einer maximalen Antwortzeit im nicht abgeschlossenen Status befinden, einen Hilfs-Rücksetzbefehl zu generieren.

## Claims

1. A method for resetting a master device (MT_A, MT_B) configured to initiate transactions (TRSCT) on a bus (BUS_1, BUS_2) of a system-on-chip (SYS), comprising monitoring a completed or non-completed state of the transactions (TRSCT) initiated by the master device and, in case of reception of a master device reset command (COM_RST), effectively resetting (COM_RST_EFF) the master device when the transactions initiated by the master device are in the completed state, wherein a blocking signal is generated at the time of reception of the master device reset command (COM_RST), so as to block initiation of a new transaction by the master device (MT_A, MT_B),
**characterised in that**
in case of reception of the master device reset command (COM_RST) during transmission of a request, the blocking signal is generated after the end of transmission of this request.

2. The method according to claim 1, wherein said monitoring comprises detecting signals transiting on input (MT_IN) and output (MT_OUT) ports of an interface between the master device and the bus (INTF_A, INTF_B).

3. The method according to claim 2, wherein a transaction comprises issuing a request (REQ) on the output port (MT_OUT) of the interface and receiving an answer (ANS) on the input port (MT_IN) of the interface, and said monitoring comprises counting the number of requests transmitted (CNT_REQ) on the output port and counting the number of answers received (CNT_ANS) on the input port, a number of answers issued equal to the number of requests transmitted being representative of the completed state of the transactions (TRSCT) initiated by the master device.

4. The method according to claim 1, wherein generating the blocking signal comprises activating an effective reset signal (RST_EFF), and effectively resetting (COM_RST_EFF) the master device comprises deactivating the effective reset signal (RST_EFF), when the transactions initiated by the master device are in the completed state and when the reset command (COM_RST) received has ended.

5. The method according to claim 4, wherein a transaction comprises an answer (ANS) transmitted on the bus, and answers transmitted on the bus when the effective reset signal (RST_EFF) is activated are not communicated to the master device (MT_A, MT_B) and are cleared from the bus.

6. The method according to claim 1, wherein generating the blocking signal comprises transmitting to the master device (MT_A, MT_B) a bus state signal (BUS_ST) forced to the busy state (BSY), effectively resetting (COM_RST_EFF) the master device comprising pulsedly activating an effective reset signal (RST_EFF).

7. The method according to claim 6, wherein a transaction comprises an answer (ANS) transmitted on the bus, and the answers transmitted on the bus when the bus state signal (BUS_ST) is forced to the busy state (BSY) are communicated to the master device (MT_A, MT_B).

8. The method according to one of the preceding claims, wherein, an auxiliary reset command is generated upon reception of a master device reset command (COM_RST), and if the transactions (TRSCT) initiated by the master device are in the non-completed state after expiry of a maximum response time.

9. A system-on-chip comprising a bus (BUS_1, BUS_2) and at least one master device (MT_A, MT_B) configured to initiate transactions on the bus, wherein a reset management circuit (GST_A, GST_B) including an input for receiving a master device reset command (COM_RST), is configured to monitor a completed or non-completed state of the transactions initiated by the master device, and in case of reception of a reset command (COM_RST) on the input, for effectively resetting (COM_RST_EFF) the master device when the transactions initiated by the master device are in the completed state, wherein the reset management circuit (GST) is configured to generate a blocking signal at the time of reception of the master device reset command (COM_RST) on the input, so as to block initiation of a new transaction by the master device,
**characterised in that**
in case of reception of the master device reset command (COM_RST) during transmission of a request, the reset management circuit (GST) is configured to generate the blocking signal after the end of transmission of this request.

10. The system-on-chip according to claim 9, wherein the reset management circuit (GST_A, GST_B) is configured to detect signals transiting on input (MT_IN) and output (MT_OUT) ports of an interface (INTF_A, INTF_B) between the master device and the bus, in order to monitor said completed or non-completed state of said transactions.

11. The system-on-chip according to claim 10, wherein a transaction comprises issuing a request (REQ) to the output port (MT_OUT) of the interface and receiving an answer (ANS) to the input port (MT_IN) of the interface, and the reset management circuit (GST) is configured to monitor said completed or non-completed state of said transactions by counting the number of requests (CNT_REQ) issued on the output port and counting the number of answers (CNT_ANS) received on the input port, a number of answers received equal to the number of requests issued being representative of the completed state of the transactions initiated by the master device.

12. The system-on-chip according to claim 9, wherein the reset management circuit (GST) is configured to generate the blocking signal by activating an effective reset signal (RST_EFF), and to reset (COM_RST_EFF) the master device effectively by deactivating the effective reset signal (RST_EFF), when the transactions initiated by the master device are in the completed state and when the reset command (COM_RST) received on the input has ended.

13. The system-on-chip according to claim 12, wherein a transaction comprises an answer (ANS) transmitted on the bus, the reset management circuit (GST) is configured not to communicate to the master device and to clear from the bus the answers transmitted on the bus when the effective reset signal (RST_EFF) is activated.

14. The system-on-chip according to claim 9, wherein the reset management circuit (GST) is configured to generate the blocking signal by transmitting to the master device a bus state signal (BUS_ST) forced to the busy state (BSY), and to reset (COM_RST_EFF) the master device effectively by pulsedly activating an effective reset signal (RST_EFF).

15. The system-on-chip according to claim 14, wherein a transaction comprises an answer (ANS) transmitted on the bus, and the reset management circuit (GST) is configured to communicate to the master device the answers transmitted on the bus when the bus state signal (BUS_ST) is forced to the busy state (BSY).

16. The system-on-chip according to one of claims 9 to 15, wherein the reset management circuit (GST) is configured to generate an auxiliary reset command, in case of reception of a master device reset command (COM_RST), and if the transactions initiated by the master device are in the non-completed state after expiry of a maximum response time.
